# EUROPEAN PATENT SPECIFICATION

(11) **EP 2 080 093 B1**
(45) Date of publication and mention of the grant of the patent: **14.06.2017**
(21) Application number: 07852721.5
(22) Date of filing: 11.10.2007
(51) Int. Cl.: G06F 21/57, G06F 9/44

(54) **TRUSTED PLATFORM MODULE MANAGEMENT SYSTEM AND METHOD**
ZUVERLÄSSIGES SYSTEM UND VERFAHREN ZUR VERWALTUNG EINES PLATTFORMMODULS
SYSTÈME ET PROCÉDÉ DE GESTION DE MODULE DE PLATE-FORME SÉCURISÉE

(30) Priority: 18.10.2006 US 583272
(43) Date of publication of application: 22.07.2009
(73) Proprietor: Hewlett-Packard Development Company, L.P., Houston, TX 77070 (US)
(72) Inventor: MADINA, Shab H, Houston, TX 77070 (US); MONDSHINE, James L, Houston, TX 77070 (US); RIOS, Jennifer, Houston, TX 77070 (US); ALI, Valiuddin Y., Houston, TX 77070 (US)
(74) Representative: Zimmermann, Tankred Klaus
(86) International application number: PCT/US2007/021879
(87) International publication number: WO 2008/048512

(56) References cited:
- US-A1- 2004 205 070
- HALL K. ET AL: "Trusted Computing and Linux" PROCEEDINGS OF THE LINUX SYMPOSIUM, [Online] 20 July 2005 (2005-07-20), pages 91-110, XP002482102 Ottawa, Canada Retrieved from the Internet: URL:http://www.kernel.org/doc/ols/2005/ols 2005v2-pages-99-118.pdf> [retrieved on 2008-05-28]
- TCG: "TCG Specification Architecture Overview, Specification Revision 1.2" TCG SPECIFICATION ARCHITECTURE OVERVIEW, TRUSTED COMPUTING GROUP, US, 28 April 2004 (2004-04-28), pages 1-54, XP002413737

## Description

### BACKGROUND

The Trusted Computing Group (TCG) develops and promotes industry standard specifications for hardware-enabled trusted computing and security technologies such as a trusted platform module (TPM). A TPM enables secure storage of digital keys, certificates and passwords and is less vulnerable to software and hardware attacks. However, country-specific and/or other types of restrictions may prohibit using computing systems having TPMs disposed thereon. Although computing systems may be specially manufactured to accommodate and/or comply with such restrictions, building and tracking these specially-manufactured computing systems during the manufacturing process, and thereafter, is costly.

US 2004/205070 A1 describes a motherboard for a computer system which provides a trusted platform by which operations can be performed with an increased level trust and confidence. The basis of trust for the motherboard is established by an encryption coprocessor and by code which interfaces with the encryption coprocessor and establishes root of trust metrics for the platform. The encryption coprocessor is built such that certain critical operations are allowed only if physical presence of an operator has been detected. Physical presence is determined by inference based upon the status of registers in the core chipset on the motherboard.

HALL K. ET AL, "Trusted Computing and Linux", PROCEEDINGS OF THE LINUX SYMPOSIUM, Ottawa, Canada, (20050720), pages 91 - 110, URL: http://www.kernel.org/doc/ols/2005/ols2005v2-pages-99-118.pdf, (20080528), XP002482102 describes that an owner of a platform is allowed to control a TPM. There are initialization and management functions that allow the owner to turn on and off the functionality, reset the TPM and take ownership of the TPM. Further, the TPM is typically shipped in a disabled, inactive and un-owned stated and the platform owner may enable, activate and take ownership of the TPM.

### BRIEF DESCRIPTION OF THE DRAWINGS

For a more complete understanding of the present invention and the advantages thereof, reference is now made to the following descriptions taken in connection with the accompanying drawings in which:
FIGURE 1 is a diagram illustrating an embodiment of a trusted platform module management system;
FIGURE 2 is a flow diagram illustrating an embodiment of a trusted platform module management method; and
FIGURE 3 is a flow diagram illustrating another embodiment of a trusted platform module management method.

### DETAILED DESCRIPTION OF THE DRAWINGS

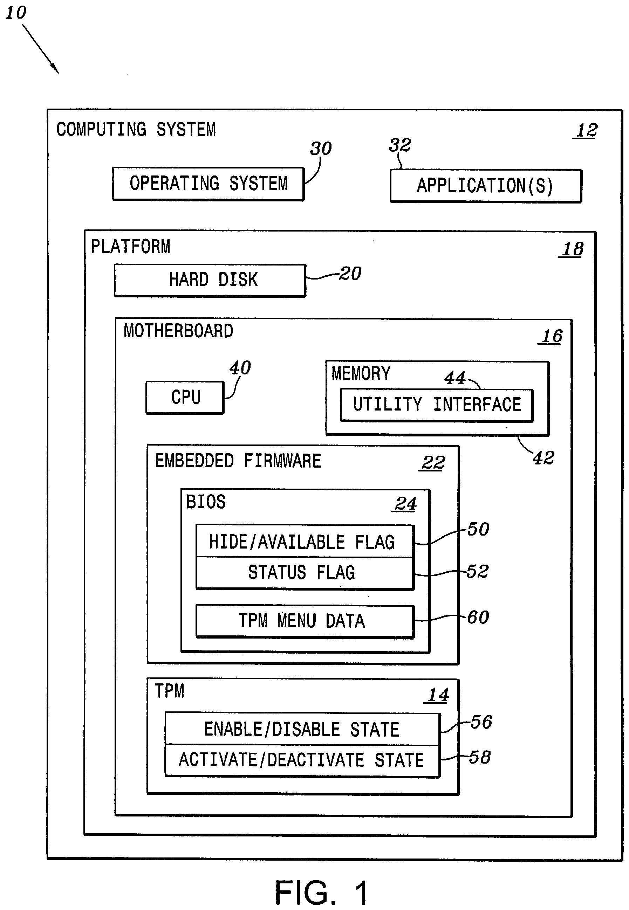

The preferred embodiments of the present invention and the advantages thereof are best understood by referring to FIGURES 1-3 of the drawings, like numerals being used for like and corresponding parts of the various drawings.

FIGURE 1 is a block diagram illustrating an embodiment of a trusted platform module (TPM) management system 10. In the embodiment illustrated in FIGURE 1, system 10 comprises a computing system 12 having a TPM 14 disposed on a motherboard 16. Generally, TPM 14 is used to store and report the values of measurements (integrity metrics) of certain software and hardware on a platform 18 of system 12. For example, in some embodiments, TPM 14 is used to measure, store and report the integrity of a hard disk 20 and embedded firmware 22 such as basic input/output system (BIOS) 24. However, it should be understood that TPM 14 may be used to store and report the integrity of other devices and/or hardware and may be used to securely store platform information and secrets such as passwords, keys and certificates. Computing system 12 may comprise any type of computing device such as, but not limited to, a desktop computer, notebook computer, tablet computer, personal digital assistant, or any other type of device in which a TPM might be present.

In the embodiment illustrated in FIGURE 1, system 12 comprises at least one operating system (OS) 30 and one or more executable applications 32. OS 30 and application(s) 32 may be stored on hard disk 20 and loaded into a memory component of computing system 12 for execution thereof. Further, motherboard 16 is configured having a central processing unit (CPU) 40 and a memory 42. In the embodiment illustrated in FIGURE 1, memory comprises a utility interface 44 which comprises a set of instructions and/or interface for programming, configuring and/or otherwise controlling various features and/or settings of computing system 12. For example, in some embodiments, utility interface 44 is used in a manufacturing environment of computing system 12 and/or for an in-field update to computing system 12 by an authorized entity to configure and/or otherwise apply various settings for computing system 12. However, it should be understood that different applications, routines or methods may be used for configuring and/or otherwise controlling various operating parameters of computing system 12, and utility interface 44 may be used outside the manufacturing environment of computing system 12.

Embodiments of system 10 enable a setting to be applied or set for TPM 14 to indicate TPM 14 as either being available (e.g., able to be used and/or otherwise accessed for use thereof by OS 30 and/or various applications 32) or hidden (e.g., unavailable and/or otherwise reported to OS 30 as not being present on computing system 12 so that OS 30 and/or applications 32 cannot readily access and/or use TPM 14). In the embodiment illustrated in FIGURE 1, utility interface 44 is used to interface with BIOS 24 to apply and/or otherwise apply the desired setting (i.e., either available or hidden) for TPM 14 in computing system 12. For example, if computing system 12 is destined for a country or a particular consumer without a restriction on use of TPM 14, utility interface 44 is used to interface with BIOS 24 to apply a setting for TPM 14 as being available. However, if computing system 12 is destined for a country or consumer having restrictions on using TPM 14, utility interface 44 is used to interface with BIOS 24 to apply a hidden setting to TPM 14, thereby making TPM 14 unavailable for use. Preferably, if a hidden or unavailable setting is applied to TPM 14, BIOS 24 is configured to report to OS 30 that TPM 14 does not reside or is not present on computing system 12. For example, in some embodiments, BIOS 24, using a status method of reporting in the Advanced Configuration and Power Interface (ACPI) namespace, reports to OS 30 that TPM 14 is not present on computing system 12 in response to detecting that a hidden or unavailable setting has been applied to TPM 14. Thus, even though TPM 14 physically resides on computing system 12, BIOS 24 reports to OS 30 that TPM 14 is not present on computing system 12 and, thus, OS 30 does not load any drivers associated with accessing and/or interfacing with TPM 14. Therefore, according to some embodiments, even though TPM 14 physically resides on computing system 12, applications 32 and/or OS 30 will not be able to access and/or otherwise use with TPM 14 and the features/functions of TPM 14 will be hidden from a user of computing system 12.

In operation, preferably during manufacturing or building of computing system 12 (e.g., before computing system 12 is delivered to a consumer), utility interface 44 is used to set the state of TPM 14 as being either hidden or available. In the embodiment illustrated in FIGURE 1, BIOS 24 comprises a hide/available flag 50 and a status flag 52 stored in non-volatile memory thereof. Hide/available flag 50 is used to indicate a setting for TPM 14 as either being hidden or available. For example, in some embodiments, if hide/available flag 50 is set to "YES," the setting for TPM 14 comprises a hidden or unavailable setting. Correspondingly, if hide/available flag 50 is set to "NO," the setting for TPM 14 comprises an available setting. However, it should be understood that flag 50 may be otherwise set for indicating the availability or unavailability of TPM 14.

Status flag 52 is used to indicate whether a hidden or available setting for TPM 14 has been selected through utility interface 44 (e.g., selected or set as either being hidden or available). Preferably, an available setting for TPM 14 is used as a default setting. Thus, if utility interface 44 is not used to select or apply a particular setting to TPM 14, the setting for TPM 14 remains as being available. However, in response to receiving a call or command from utility interface 44 to set TPM 14 thereafter as being either hidden or available, status flag 52 is set to "YES." Status flag 52 is used to prevent subsequent changes to the setting applied to TPM 14. For example, in response to receiving a subsequent call or command from utility interface 44 for applying a setting for TPM 14, BIOS 24 determines whether status flag 52 has been set to "YES." If status flag 52 has been set to "YES," BIOS 24 rejects the call and/or otherwise generates an error message, thereby preventing a subsequent change to the setting applied to TPM 14. Accordingly, utility interface 44 is preferably used during manufacturing or building of computing system 12 to apply either a hidden or available setting to TPM 14 such that, once applied, the setting is not thereafter readily changeable by a consumer.

During booting of computing system 12 (e.g., in response to a power-on event or wake event from a hibernation, sleep or other type of reduced-power mode), BIOS 24 determines whether hide/available flag 50 is set to "YES," thereby indicating a hidden or unavailable status setting for TPM 14. In the embodiment illustrated in FIGURE 1, TPM 14 comprises an enable/disable state setting 56 and an activate/deactivate state setting 58. During manufacturing or building of computing system 12, TPM 14 is generally maintained in a disabled state setting 56 unless, for example, a field upgrade or other action required TPM 14 to be enabled. Thus, in response to BIOS 24 determining that a hidden setting has been applied to TPM 14, if TPM 14 is in an enabled state, BIOS 24 issues a disable command and a deactivate command to TPM 14, and issues a command to lock the state of TPM 14 before BIOS 24 transfers control of computing system 12 to OS 30. Thus, embodiments of system 10 physically disable TPM 14 and lock the state of TPM 14 before transferring control of computing system 12 to OS 30.

Further, in response to BIOS 24 determining that a hidden setting has been applied to TPM 14, BIOS 24 disables and/or otherwise prevents display of any TPM menu data 60 associated with TPM 14. For example, because TPM 14 is present in computing system 12, BIOS 24 generally comprises provides an interface to enable various options and/or settings associated with TPM 14 to be applied and/or otherwise configured, such as through BIOS 24 setup in the form of TPM menu data 60. Embodiments of system 10 disable and/or otherwise prevent display of TPM menu data 60 in response to detecting a hidden setting of TPM 14.

BIOS 24 is preferably configured to interface with OS 30 to report to OS 30 a lack of presence of TPM 14 on computing system 12 if the setting of TPM 14 is set to hidden. For example, in some embodiments, BIOS 24 uses a status method of reporting the presence and resources of various devices of computing system 12 to OS 30 through ACPI namespace. BIOS 24 is preferably configured to, in response to detecting a hidden setting for TPM 14, indicate to OS 30 a lack of presence of TPM 14 on computing system 12. Thus, based on the status reporting received from BIOS 24 indicating a lack of presence of TPM 14, OS 30 does not load any drivers associated with TPM 14, thereby preventing OS 30 and/or applications 32 from accessing and/or otherwise interfacing with TPM 14. However, it should be understood that in some embodiments, BIOS 24 is configured to also refrain from performing particular configuration settings/requests and/or refrain from enabling particular hardware resources necessary for the function and/or use of TPM 14.

Thus, in operation, utility interface 44 is used to apply and/or otherwise designate a setting for TPM 14 as being either hidden or available. After a desired setting is applied and/or otherwise designated, status flag 52 is used to indicate that a desired setting has been applied to TPM 14 to prevent a subsequent change to the setting. Thus, after either a hidden or available setting has been applied to TPM 14, the interface to change the setting of TPM 14 is essentially locked. Thus, in operation, if a hidden setting has been applied to TPM 14, a user or administrator of computing system 12 cannot generally thereafter change the setting for TPM 14 to being available.

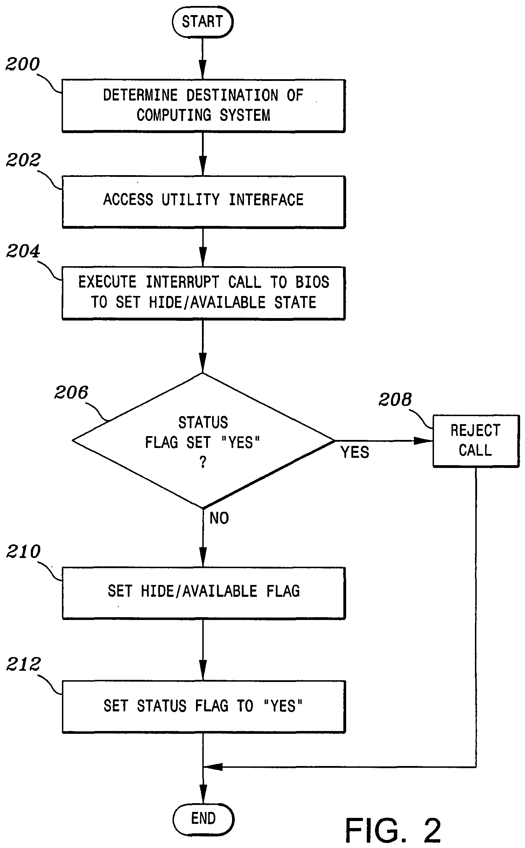

FIGURE 2 is a flow diagram illustrating an embodiment of a TPM management method. The method begins at block 200, where a destination of computing system 12 is determined and/or an indication of the setting to apply to TPM 14 is otherwise determined. For example, in some embodiments, during manufacturing or building of computer system 12, a bill of material or other type of manufacturing building or parts list associated with a particular computing system 12 may include a designation or other type of indication that a hidden setting should be applied to TPM 14 for the particular computing system 12 (e.g., based on a destination address of the particular computing system 12, by a phantom part number or other parts list designation, etc.). However, it should be understood that different methods and/or processes may be used to determine the TPM 14 setting to apply for particular computing system 12.

At block 202, utility interface 44 is accessed for computing system 12. At block 204, utility interface 44 transmits a call or command to BIOS 24 to set the state of TPM 14 as being either hidden or available. At decisional block 206, a determination is made by BIOS 24 whether status flag 52 has been set to "YES." If status flag 52 has been set to "YES" (e.g., indicating that a hidden/available setting has already been applied or set for TPM 14), the method proceeds to block 208, where BIOS 24 rejects the call or command and/or otherwise generates an error message, thereby preventing any further change to the TPM 14 setting. If at decisional block 206 it is determined that status flag 52 has not been set to "YES," the method proceeds to block 210, where a desired setting for TPM 14 is received. Preferably, hide/available flag 50 is set to "NO" as a default setting, thereby indicating availability of TPM 14. However, it should be understood that a default setting for TPM 14 may be otherwise configured. In response to receiving a setting to apply to TPM 14, at block 212, BIOS 24 sets the new value of the hide/available flag 50 and sets the status flag 52 to "YES," thereby indicating that a setting for TPM 14 has been selected, and the method ends.

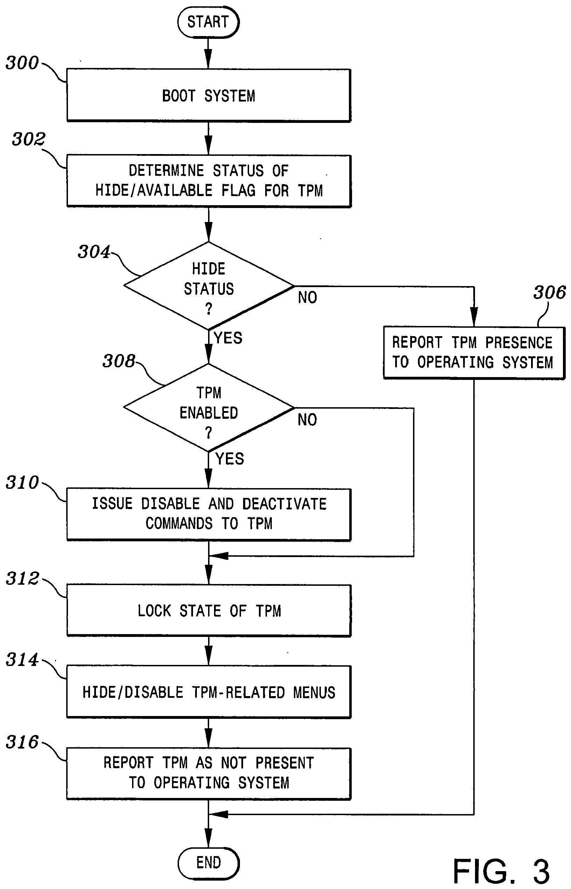

FIGURE 3 is a flow diagram illustrating another embodiment of a TPM management method. The method begins at block 300, where computing system 12 is booted (e.g., in response to a power-on event or wake event from a hibernation, sleep or other reduced-power operating mode). At block 302, during a power-on self-test (POST) or other routine of BIOS 24, BIOS 24 determines the status of hide/available flag 50 for TPM 14. At decisional block 304, a determination is made whether hide/available flag 50 has been set indicating a hidden setting for TPM 14. If hide/available flag 50 does not indicate a hidden setting for TPM 14, the method proceeds to block 306, where BIOS 24 reports to OS 30 the presence of TPM 14 on computing system 12, thereby enabling OS 30 to load drivers associated with TPM 14 and/or otherwise access and interface with TPM 14. If at decisional block 304 it is determined that hide/available flag 50 indicates a hidden setting for TPM 14, the method proceeds to decisional block 308, where BIOS 24 determines whether TPM 14 is set as being enabled. If TPM 14 is not currently enabled, the method proceeds to block 312. If TPM 14 is set as being enabled, the method proceeds to block 310, where BIOS 24 issues a disable command and a deactivate command to TPM 14, thereby physically disabling and/or deactivating TPM 14.

At block 312, BIOS 24 locks the state of TPM 14. At block 314, BIOS 24 disables and/or otherwise prevents presentation of TPM-related menus such as TPM menu data 60 associated with setup access of BIOS 24. At block 316, BIOS 24 reports to OS 30 a lack of presence of TPM 14 on computing system 12. Thus, in response to receiving a report of a lack of presence TPM 14 on computing system 12, OS 30 does not load any drivers associated with TPM 14, thereby preventing access to an/or use of TPM 14.

Thus, embodiments system 10 enable a TPM disposed on a computing system to be set as hidden or unavailable, thereby preventing access and/or use of the TPM by an operating system and/or other applications residing on the computing system. Further, embodiments of system 10 enable using a particular motherboard configuration for a computing system (e.g., one having a TPM) to be used across different markets and/or geographical consumer areas while accommodating any TPM-related restrictions.

## Claims

1. A trusted platform module (TPM) management system (10), comprising:
a computing system (12) having a basic input/output system (BIOS) (24), a TPM (14) and an operating system (30), wherein, during booting of the computing system (12), the BIOS (24) configured to, in response to detecting an unavailable state setting for the TPM (14), report to the operating system (30) a lack of presence of the TPM (14) on the computing system (12),
wherein the computing system (12) comprises a utility interface (44) used in a manufacturing environment of the computing system (12) and/or for an in-field update to the computing system (12) by an authorized entity to configure and/or otherwise apply various settings for the computing system (12),
wherein the BIOS (24) comprises a hide/available flag (50) and a status flag (52), the hide/available flag (50) being used to indicate a setting for the TPM (14) as either being hidden or available, and the status flag (52) being used to indicate whether a hidden or available setting for the TPM (14) has been selected through the utility interface (44), and
wherein, in response to receiving a call or command from the utility interface (44) to set the TPM (14) as being either hidden or available, the status flag (52) is set to prevent subsequent changes to the setting applied to the TPM (14) in that the BIOS (24) is configured to reject a call to set a state setting for the TMP (14) if the status flag (52) has been set.

2. The system (10) of Claim 1, wherein the BIOS (24) is configured to lock the unavailable state setting of the TPM (14) before transferring control of the computing system (12) to the operating system (30).

3. The system (10) of Claim 1, wherein the BIOS (24) is configured to disable TPM (14) menu data (60) in response to detecting the unavailable state setting.

4. A trusted platform module (TPM) management method, comprising:
reporting, during booting of a computing system (12) from a basic input/output system (BIOS) (24) of the computing system (12) to an operating system (30) that a TPM (14) disposed on the computing system (12) is not present on the computing system (12) in response to detecting an unavailable state setting for the TPM (14),
wherein the computing system (12) comprises a utility interface (44) used in a manufacturing environment of the computing system (12) and/or for an in-field update to the computing system (12) by an authorized entity to configure and/or otherwise apply various settings for the computing system (12),
wherein the BIOS (24) comprises a hide/available flag (50) and a status flag (52), the hide/available flag (50) being used to indicate a setting for the TPM (14) as either being hidden or available, and the status flag (52) being used to indicate whether a hidden or available setting for the TPM (14) has been selected through the utility interface (44), and
wherein, in response to receiving a call or command from the utility interface (44) to set the TPM (14) as being either hidden or available, the status flag (52) is set to prevent subsequent changes to the setting applied to the TPM (14) so that the BIOS rejects a call to set a state setting for the TPM (14) if the status flag (52) has been set.

5. The method of Claim 4, further comprising setting the unavailable state setting based on a destination of the computing system (12).

6. The method of Claim 4, further comprising locking the unavailable state setting of the TPM (14) before transferring control of the computing system (12) to the operating system (30).

## Patentansprüche

1. Trusted Platform Module(TPM)-Managementsystem (10), Folgendes umfassend:
ein Computersystem (12) mit einem Basic Input/Output System (BIOS) (24), einem TPM (14) und einem Betriebssystem (30), wobei beim Hochfahren des Computersystems (12) das BIOS (24) konfiguriert ist, als Reaktion auf das Erfassen einer unverfügbar-Zustandseinstellung für das TPM (14) an das Betriebssystem (30) ein Ausbleiben des Vorliegens des TPM (14) im Computersystem (12) zu berichten,
wobei das Computersystem (12) eine in einer Herstellungsumgebung des Computersystems (12) und/oder für eine Feldaktualisierung des Computersystems (12) durch eine autorisierte Entität zum Konfigurieren verschiedener Einstellungen für das Computersystem (12) und/oder zum anderweitigen Anwenden derselben eingesetzte Dienstschnittstelle (44) umfasst,
wobei das BIOS (24) ein ausblenden/verfügbar-Flag (50) und ein Status-Flag (52) umfasst, wobei das ausblenden/verfügbar-Flag (50) eingesetzt wird, um eine Einstellung für das TPM (14) als entweder ausgeblendet oder verfügbar anzugeben, und das Status-Flag (52) eingesetzt wird, um anzugeben, ob eine ausblenden- oder eine verfügbar-Einstellung für das TPM (14) durch die Dienstschnittstelle (44) ausgewählt worden ist, und
wobei als Reaktion auf das Empfangen eines Aufrufs oder eines Befehls von der Dienstschnittstelle (44), um das TPM (14) als entweder ausgeblendet oder verfügbar einzustellen, das Status-Flag (52) eingestellt wird, darauffolgende Änderungen an der Einstellung, die am TPM (14) vorgenommen wird, zu verhindern, dadurch dass das BIOS (24) konfiguriert ist, einen Aufruf, eine Zustandseinstellung für das TPM (14) einzustellen, zurückweist, wenn das Status-Flag (52) eingestellt worden ist.

2. System (10) nach Anspruch 1, wobei das BIOS (24) konfiguriert ist, die unverfügbar-Zustandseinstellung des TPM (14) zu sperren, bevor die Kontrolle über das Computersystem (12) an das Betriebssystem (30) übergeben wird.

3. System (10) nach Anspruch 1, wobei das BIOS (24) konfiguriert ist, Menüdaten (60) des TPM (14) als Reaktion auf das Erfassen der unverfügbar-Zustandseinstellung zu desaktivieren.

4. Trusted Plattform Module(TPM)-Managementverfahren, Folgendes umfassend:
Berichten, während des Hochfahrens eines Computersystems (12) aus einem Basic Input/Output System (BIOS) (24) des Computersystems (12), an ein Betriebssystem (30), dass ein TPM (14), das in dem Computersystem (12) angeordnet ist, nicht im Computersystem (12) vorliegt, als Reaktion darauf, dass eine nicht-verfügbar-Zustandseinstellung für das TPM (14) erfasst wird,
wobei das Computersystem (12) eine in einer Herstellungsumgebung des Computersystems (12) und/oder für eine Feldaktualisierung des Computersystems (12) durch eine autorisierte Entität zum Konfigurieren verschiedener Einstellungen für das Computersystem (12) und/oder zum anderweitigen Anwenden derselben eingesetzte Dienstschnittstelle (44) umfasst,
wobei das BIOS (24) ein ausblenden/verfügbar-Flag (50) und ein Status-Flag (52) umfasst, wobei das ausblenden/verfügbar-Flag (50) eingesetzt wird, um eine Einstellung für das TPM (14) als entweder ausgeblendet oder verfügbar anzugeben, und das Status-Flag (52) eingesetzt wird, um anzugeben, ob eine ausblenden- oder eine verfügbar-Einstellung für das TMP (14) durch die Dienstschnittstelle (44) ausgewählt worden ist, und
wobei als Reaktion auf das Empfangen eines Aufrufs oder eines Befehls von der Dienstschnittstelle (44), um das TPM (14) als entweder ausgeblendet oder verfügbar einzustellen, das Status-Flag (52) eingestellt wird, darauffolgende Änderungen an der Einstellung, die am TPM (14) vorgenommen wird, zu verhindern, sodass das BIOS einen Aufruf, eine Zustandseinstellung für das TPM (14) einzustellen, zurückweist, wenn das Status-Flag (52) eingestellt worden ist.

5. Verfahren nach Anspruch 4, ferner umfassend das Einstellen der nicht-verfügbar-Zustandseinstellung auf der Grundlage eines Ziels des Computersystems (12).

6. Verfahren nach Anspruch 4, ferner umfassend das Sperren der nicht-verfügbar-Zustandseinstellung des TPM (14) vor dem Übergeben der Kontrolle des Computersystems (12) an das Betriebssystem (30).

## Revendications

1. Système de gestion de module de plateforme sécurisée (TPM) (10), comprenant :
un système informatique (12) ayant un système d'entrée-sortie de base (BIOS) (24), un TPM (14) et un système d'exploitation (30), dans lequel, lors du démarrage du système informatique (12), le BIOS (24) étant configuré pour, en réponse à la détection d'un paramètre d'état indisponible pour le TPM (14), signaler au système d'exploitation (30) un manque de présence du TPM (14) sur le système informatique (12),
dans lequel le système informatique (12) comprend une interface utilitaire (44) utilisée dans un environnement de fabrication du système informatique (12) et/ou pour une mise à jour in situ du système informatique (12) par une entité autorisée pour configurer et/ou autrement appliquer plusieurs paramètres pour le système informatique (12),
dans lequel le BIOS (24) comprend un indicateur cacher/disponible (50) et un indicateur d'état (52), l'indicateur cacher/disponible (50) étant utilisé pour indiquer un paramètre pour le TPM (14) comme étant soit caché soit disponible, et l'indicateur d'état (52) étant utilisé pour indiquer si un paramètre caché ou disponible pour le TPM (14) a été sélectionné à travers l'interface utilitaire (44), et
dans lequel, en réponse à la réception d'un appel ou d'une commande à partir de l'interface utilitaire (44) pour régler le TPM (14) comme étant soit caché soit disponible, l'indicateur d'état (52) est réglé pour empêcher les modifications ultérieures du réglage appliqué au TPM (14) de telle sorte que le BIOS (24) est configuré pour rejeter un appel afin de régler un paramètre d'état pour le TPM (14) si l'indicateur d'état (52) a été réglé.

2. Système (10) selon la revendication 1, dans lequel le BIOS (24) est configuré pour verrouiller le paramètre d'état indisponible du TPM (14) avant de transférer la commande du système informatique (12) vers le système d'exploitation (30).

3. Système (10) selon la revendication 1, dans lequel le BIOS (24) est configuré pour désactiver les données de menu (60) du TPM (14) en réponse à la détection du paramètre d'état indisponible.

4. Procédé de gestion de module de plateforme sécurisée (TPM), comprenant :
le signalement, lors du démarrage d'un système informatique (12) à partir d'un système d'entrée-sortie de base (BIOS) (24) du système informatique (12) à un système d'exploitation (30) qu'un TPM (14) disposé sur le système informatique (12) n'est pas présent sur le système informatique (12) en réponse à la détection d'un paramètre d'état indisponible pour le TPM (14),
dans lequel le système informatique (12) comprend une interface utilitaire (44) utilisée dans un environnement de fabrication du système informatique (12) et/ou pour une mise à jour in situ du système informatique (12) par une entité autorisée pour configurer et/ou autrement appliquer plusieurs paramètres pour le système informatique (12),
dans lequel le BIOS (24) comprend un indicateur cacher/disponible (50) et un indicateur d'état (52), l'indicateur cacher/disponible (50) étant utilisé pour indiquer un paramètre pour le TPM (14) comme étant soit caché soit disponible, et l'indicateur d'état (52) étant utilisé pour indiquer si un paramètre caché ou disponible pour le TPM (14) a été sélectionné à travers l'interface utilitaire (44), et
dans lequel, en réponse à la réception d'un appel ou d'une commande à partir de l'interface utilitaire (44) pour régler le TPM (14) comme étant soit caché soit disponible, l'indicateur d'état (52) est réglé pour empêcher les modifications ultérieures du réglage appliqué au TPM (14) de telle sorte que le BIOS rejette un appel afin de régler un paramètre d'état pour le TPM (14) si l'indicateur d'état (52) a été réglé.

5. Procédé selon la revendication 4, comprenant en outre le réglage du paramètre d'état indisponible sur la base d'une destination du système informatique (12).

6. Procédé selon la revendication 4, comprenant en outre le verrouillage d'un paramètre d'état indisponible du TPM (14) avant de transférer la commande du système informatique (12) vers le système d'exploitation (30).
